Europäisches Patentamt

European Patent Office

Office européen des brevets

(19)

(11) Veröffentlichungsnummer: **0 128 122 B2**

(12)

# NEUE EUROPÄISCHE PATENTSCHRIFT

(45) Veröffentlichungstag der neuen Patentschrift:
**24.07.91 Patentblatt 91/30**

(51) Int. Cl.⁵: **B01D 21/24**

(21) Anmeldenummer: **84810268.7**

(22) Anmeldetag: **29.05.84**

(54) **Ablaufvorrichtung in einem Klär- oder Staubecken.**

(30) Priorität: 01.06.83 CH 3006/83
22.05.84 CH 2516/84

(43) Veröffentlichungstag der Anmeldung:
**12.12.84 Patentblatt 84/50**

(45) Bekanntmachung des Hinweises auf die
Patenterteilung:
**06.05.87 Patentblatt 87/19**

(45) Bekanntmachung des Hinweises auf die
Entscheidung über den Einspruch:
**24.07.91 Patentblatt 91/30**

(84) Benannte Vertragsstaaten:
**AT CH DE FR LI**

(56) Entgegenhaltungen:
DE-A- 2 850 224
DE-A- 3 018 480
DE-A- 3 112 832

(56) Entgegenhaltungen:
DE-B- 1 227 425
DE-U- 8 033 770
DE-U- 8 136 065
FR-A- 2 044 046
GB-A- 1 353 806
GB-A- 1 412 102
US-A- 947 325
US-A- 1 652 036
US-A- 4 154 678

(73) Patentinhaber: W. Nill, Metallbau
Rudolf Dieselstrasse 2
CH-8404 Winterthur (CH)

(72) Erfinder: Nill, Werner
Eigenheimweg 45
CH-8400 Winterthur (CH)

(74) Vertreter: Gachnang, Hans Rudolf
Patentanwalt H.R. Gachnang Badstrasse 5
Postfach
CH-8501 Frauenfeld (CH)

## Beschreibung

Die Erfindung betrifft eine Ablaufvorrichtung mit pro Zeiteinheit im wesentlichen konstanter Abflussmenge in einem Stau- oder Klärbecken oder Regulierbauwerk mit veränderlichem Flüssigkeitsspiegel, mit einer Ablauföffnung, durch die im Becken befindliches Wasser durch einen tiefer gelegenen Ausgang aus dem Becken abfliesst.

Im Abwasseranlagen ist oft ein Wasser- order Abwasserklär- order Speicherbecken vorhanden, dessen Abfluss in einer Kläranlage order Leitungsnetz erfolgt und eine bestimmte Menge pro Zeiteinheit nicht überschreiten darf. Teilweise sind diese Becken ständig von Abwasser durchflossen und weisen in der Regel einen Notüberlauf auf.

Bei Regenfällen verstärkt sich der Zufluss in der Regel derart, dass der Ablauf nicht mehr genügt und der Wasserstand im Becken steigt. Durch den erhöhten Wasserdruck vor dem Abfluss steigt die Abflussmenge über das Zulässige und überschwemmt z. B. die Abwasserreinigungsangle oder andere nachgeschaltete Organe.

Um trotzdem die Ablaufmenge konstant zu halten, sind bereits mehrere Lösungen vorgeschlagen, wie Wirbeldrosseln, Drosselschieber, Schlauchdrosseln, elektrische Steuerungen. Diese Vorrichtungen sing jedoch ungenau oder aufwendig, brauchen Bauwerke und sind im Abwasserbetrieb verstopfungsanfällig und brauchen Wartung.

Aus der US-A-1 652 036 ist ein Absetztank bekannt. In welcnem ein in der Nähe des Bodens schwenkbar gelargertes Rohr mit einem Schwimmer und einer am Ende eines Rohrbogens angeordneten, in die Flüssigkeit eintauchenden Ablauföffnung.

Mit der bekannten Vorrichtung kann aus dem Bereich des Flüssigkeitsspiegels eine dem Durchmesser der Rohres entsprechende und in Abhängigkeit des Flüssigkeitsspiegels sich ändernde Flüssigkeitsmenge abgeführt werden.

Solche Vorrichtungen sind bei Abwasseranlagen nicht einsetzbar. da damit keine konstante Menge pro Zeiteineit abführpar ist und zudem voll beaufschlagte Ablaufleitungen dauend der Gefahr einer Verstopfung durch Festkörper ausgesetzt sind. Die abzuführende Menge ist zudem nur in geringem Masse durch Verstellen des Schwimmers möglich, ändert sich aber stets mit dem jeweiligen Flüssigkeitsstand.

In der französischen Patentschrift FR-A-2 044-046 ist eine höhenbewegliche Ablauföffnung in einem Belüftungsbecken beschrieben, welche Ablauföffnung parallel zum Wasserspiegel und unterhalb demselben angeordnet ist.

Bei einer Vorrichtung der genannten Art bestimmt der Querschnitt der Ablaufleitung die Menge der abführbaren Flüssigkeit ; eine Regulierung der abfliessenden Flüssigkeitsmenge ist bei dieser Vorrichtung nicht möglich.

Aus der US-A-947,325 ist weiter eine Vorrichtung mit einem, an einem Auftriebskörper schwenkbar befestigten Ablaufrohr bekannt. Der Querschnitt der Ablauföffnung wird mittels eines Schiebers in Abhängigkeit des Wasserstandes im Becken verstellt. Die bekannte Vorrichtung is für den Einsatz in Stau- und Klärbecken nicht geeignet, da für einen störungsfreien Betrieb stets mehrere mechanische Komponenten aufeinander abgestimmt werden müssen.

Es ist deshalb Aufgabe der Erfindung, eine Ablaufvorrichtung zu schaffen, die eine genaue Regulierung der Abflussmenge gewährleistet, wenig verstopfungsanfällig ist und dennoch kostengünstig hergestellt werden kann.

Diese Aufgabe wird durch ein Stau- oder Klärbecken oder Regulierbauwerk gemäss kennzeichen des Patentanspruches 1 gelöst.

Weitere vorteilhafte Ausbildungen ergeben sich aus den abhängigen Ansprüchen.

Die erfindungsgemässe Ablaufvorrichtung hat insbesondere den Vorteil, dass die Ablauföffnung sehr gross gewählt werden kann, wodurch eine Verstopfung durch Festkörper ausgeschlossen werden kann.

Ausführungsbeispiele der Erfindung werden nachfolgend anhand der Zeichnung näher erläutert. Es zeigen :

Figur 1 eine Teileinsicht eines Beckens mit einer Ablaufvorrichtung,

Figur 2 einen Schnitt durch das Becken und die Ablaufvorrichtung entlang der Schnittgeraden 1,

Figur 3 eine Ansicht einer Ablaufvorrichtung nach einer weiteren Variante,

Figur 4 einen Schnitt entlang der Linie V-V der Fig. 4,

Figur 5 eine Ansicht eines Ablaufrohres mit einem rohrtörmigen Auftriebkorper,

Figur 6 eine Tellansicht eines Ablaufronres mit einer Hilfsöffnung,

Figur 7 eine Ansicht auf eine Ablaufvorrichtung nach einer weiteren Ansicht,

Figur 8 eine Draufsicht auf die Ablaufvorrichtung nach Fig. 13,

Figur 9 ein Diagramm der Abflussmengen aus einem Becken mit einer Bodenöffnung.

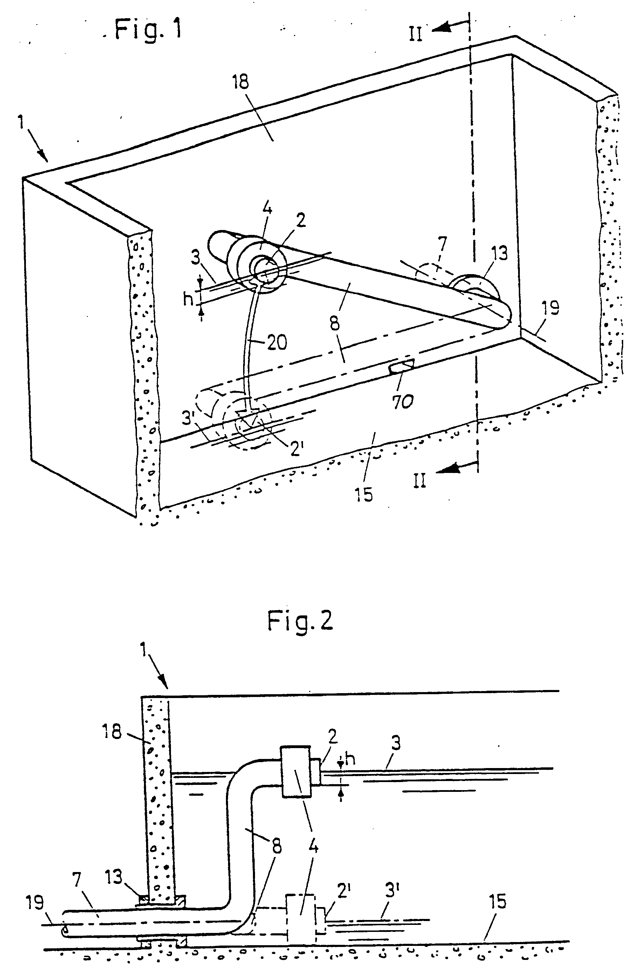

Die Fig. 1 und 2 zeigen ein Stau- oder Klärbecken 1, dem durch eine hier nicht dargestellte Leitung Abwasser zufliesst. In einer Seitenwand 18 des Beckens 1 ist in der Nähe des Bodens 15 eine Ausgangsöffnung 13 angeordnet, von der eine Ausgangsleitung 7 wegführt. Die Ablaufvorrichtung besteht aus einem Ablaufrohr 8, das mit dem einen Ende drehbar in der Ausgangsöffnung 13 befestigt ist. Am anderen Ende mündet das Rohr 8 in der Ablauföffnung 2, durch welche das im Becken 1 angesammelte Wasser abfliesst. In der Nähe der Ablauföffnung 2 ist ein Auftriebskörper 4 befestigt. der das Rohr 8 an seinem freien Ende so weit über Wasser hält, dass die Ablauföffnung nur teilweise in das Wasser eintaucht. Bei sinkendem oder steigendem Wasserstand schwenkt das Ablaufrohr 8 in einer Richtung des Doppelpfeiles 20 durch eine Drehachse 19, so dass die Eintauchtiefe der Ablauföffnung 2 unabhängig vom Wasserstand konstant bleibt. Die Eintauchtiefe kann beispielsweise durch zusätzliche Gewichte, Gestänge oder andere kraftübertragende Mittel in der Nähe der Ablauföffnung 2 eingestellt werden. Die Auftriebskraft kann auch so eingestellt sein, dass die Ausgangsöffnung 2 vollständig unter der Wasseroberfläche ist, wobei auch hier die Eintauchtiefe unabhängig vom Wasserstand konstant bleibt. Das Ablaufrohr 8 kann ausser der hier dargestellten Z-förmigen Ausbildung selbstverständlich auch andere Formen aufweisen. Die Ablauföffnung 2 is rund, kann jedoch auch einen anderen Querschnitt, vorzugsweise viereckig, aufweisen. Die Dimension der Ablauföffnung 2 kann sehr gross gewählt werden, da unabhängig davon die Ablaufmenge des Wassers durch die Eintauchtiefe stufenlos einstellbar ist. Die Oeffnung kann also so dimensioniert werden, dass auch grosse auf dem Wasser schwimmende Verunreinigungen durch das Ablaufrohr 8 mitgenommen werden können, so dass keine Verstopfungen auftreten. Die Fig. 1 und 2 zeigen die Ablaufvorrichtung bei hohem Wasserstand 3 und in gestrichelter Darstellung bei tiefem Wasserstand 3'. Bei tiefem Wasserstand liegt die Ablauföffnung 2' dicht über dem Boden 15.

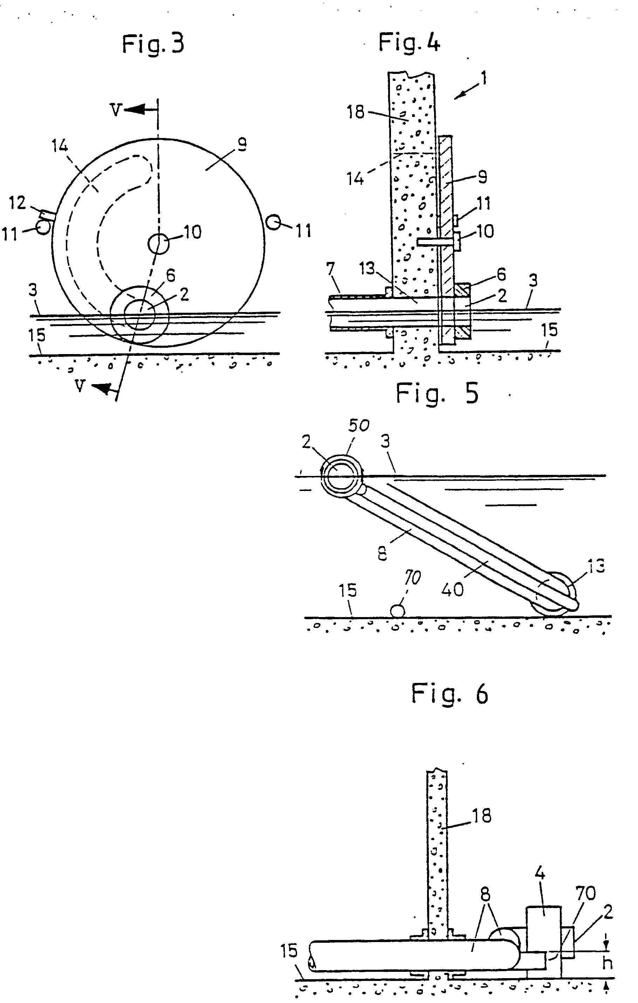

Die Fig. 3 und 4 zeigen eine weitere Ausführungsvariante der Erfindung. Hier ist an der Wand 18 des Beckens 1 ein um einen Bolzen 10 drenbarer Teller 9 befestigt. Hinter dem Teller 9 befindet sich in der Wand eine sichelförmige Oeffnung 14, an der entlang sich die Auflauföffnung 2 bewegt. In der Nähe der Ablauföffnung 2 ist am Teller 9 ein Auftriebskörper 6 befestigt, der bei steigendem oder sinkendem Wasserstand den Teller 9 um den Bolzen 10 dreht, so das die Ablauföffnung 2 immer gleich tief in dass Wasser eingetraucht ist. Der Schwenkbereich des Tellers 9 wird beispielsweise durch Anschläge 11 und einen Nocken 12 zur Vermeidung von Totlagen begrenzt.

Die Fig. 5 zeigt ein Ablaufrohr 8 mit einem rohrförmigen Hilfsauftriebskörper 40, der sich über die ganze Länge des Ablaufrohres 8 erstreckt. Der Auftrieb kann hier so gewählt werden, dass das Ablaufrohr 8 bei jeder Lage im Wasser schwebt. Der Auftriebskörper 40 ist vorzugsweise derart bemessen, dass damit das Gewicht des Ablaufrohres 8 aufgehoben wird.

Neben der eigentlichen Ablauföffnung 2 kann, beispielsweise im Ablaufrohr 8, in Bodennähe eine Hilfsöffnung 70 vorgesehen sein, die so dimensioniert ist, dass die geringe in Trockenperioden anfallende Wassermenge abfliessen kann. Auf die Hilfsöffnung 70 wird bei hohem Wasserstand ein starker Wasserdruck ausgeübt, so dass allfällige Bodenablagerungen abgeführt werden. Die Dimensionen der Ablauföffnung 2 und der Hilfsöffnung 70 sind so dimensioniert, dass die zulässige Abflussmenge pro Zeiteinheit bei jedem Wasserstand nicht überschritten wird. Dies ist üblicherweise das Doppelte der normalen Wassermenge, was in Fachkreisen mit dem Ausdruck 20TW zum Ausdruck gebracht wird.

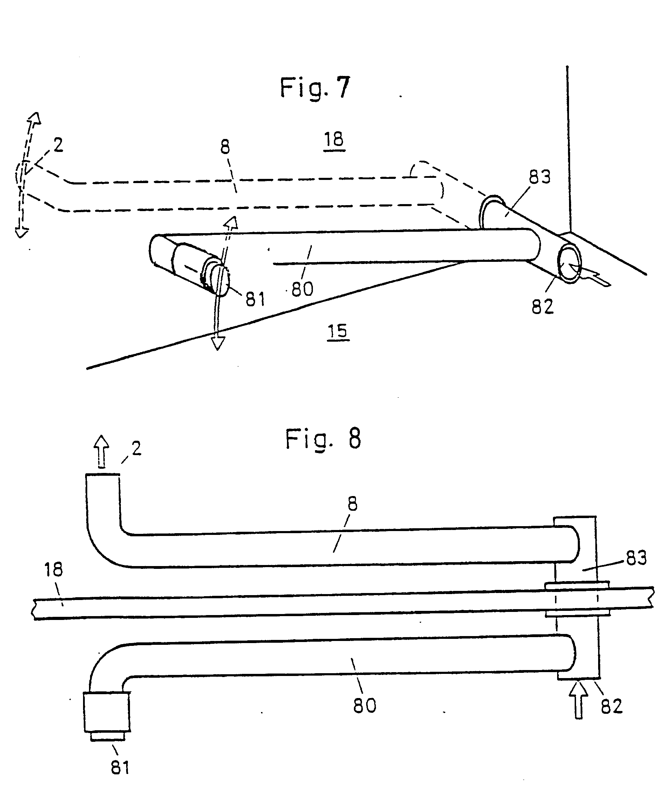

Das in den Fig. 7 und 8 dargestellte Ausführungsbeispiel besteht aus zwei etwa spiegelbildlich zur Wand 13 angeordneten Ronren 8 und 80, die über einen durch die Wand 18 führenden Bereich 83 starr miteinander verbunden sind. Der Bereich 83 weist eine bodennahe Abflussöffnung 82 auf, durch die das abfliessende Wasser in das Ablaufrohr 8 gelangt und bis zur Ablauföffnung 2 steigt, wo es ausserhalb des Beckens 1 abfliesst. Das Rohr 80, das hohl sein kann, ist an seinem freien Ende mit einem Deckel 81 dicht geschlossen und mit einem Auftriebkörper 50 versehen, dessen Auftriebskraft so stark ist. dass das Wasser bei der Ablauföffnung 2 bei jedem Wasserstanc mit konstanter und vorbestimmter Stärke ausfliesst. Der auftriebkörper 50 ist am Rohr 80 befestigt.

Die Hilfsöffnung 70 kann selbstverständlich auch bei den übrigen beschriebenen Ausführungsformen des Erfindungsgegenstandes vorgesehen werden und an beliebiger Stelle angeordnet werden.

Falls im Stau- oder Klärbecken 1 der höchste und der niedrigste Wasserstand 3 sehr weiter auseinanderliegen, kann es notwendig werden, den sich verändernden Auftrieb des Ablaufrohres 8 sowie der sich verändernden hydraulischen Verhältnisse im Ablaufrohr 8 auszugleichen.

Die Auftriebsänderung entsteht durch die grössere Geschwindigkeit des abfliessenden Wassers, wodurch sich weniger Wasser im Rohr 8 befindet.

Ist hingegen eine Bodenöffnung 70 vorgesehen, so ist eine Korrektur der Eintauchtiefe h nicht notwendig, weil die mit steigender Wassersäule höhere Durchflussmenge in der Bodenöffnung 7 einen Ausgleich schafft, der die Gesamtausflussmenge in technisch vernünftigen Grenzen hält.

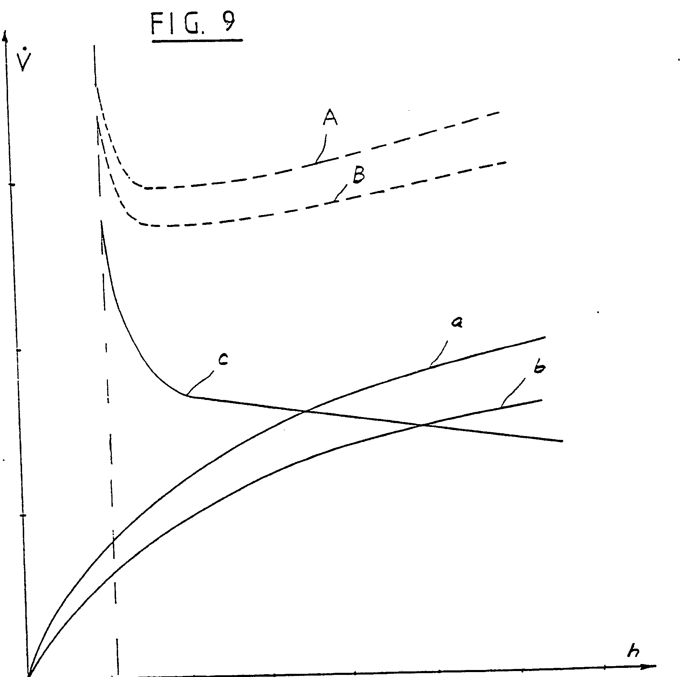

Im Diagramm nach Fig. 9 sind die Abflussmengen in Ablaufrohr 8 und in der Bodenöffnung 70 dargestellt. Die Kurven a und b zeigen die Ablaufmengen durch die Bodenöffnung 70 bei Querschnitten vom 30 $cm^2$ und 40 $cm^2$, die Kurve c diejenige durch das Ablaufrohr 8 mit einem Querschnitt von 200 $cm^2$. Die beiden Summenkurven A und B zeigen, dass die Durchflussmengen innerhalb des üblichen Arbeitsbereiches (Wasserstandes) im wesentlichen konstant sind.

## Patentansprüche

1. Stau- oder Klärbecken oder Regulierbauwerk (1) mit veränderlichem Flüssigkeitsspiegel mit einer Ablaufvorrichtung mit pro Zeiteinheit im wesentlichen

konstanter Abflussmenge, mit einer höhenverstellbaren, im wesentlichen senkrecht zum Flüssigkeitsspiegel (3) und am Ende eines Ablaufrohres (8) angeordneter Ablauföffnung (2,2') sowie einem mit dem Rohr (8) verbundenen Auftriebskörper (4,6), durch die im Becken (1) befindliches Wasser durch einen tiefer gelegenen Ausgang (7) aus dem Becken (1) abfliesst, dadurch gekennzeichnet, dass die Ablauföffnung (2,2') kreisförmig ausgebildet ist und der Auftriebskörper (4,6) kreisförmig konzentrisch zur Ablauföffnung (2,2') angeordnet ist, und dass bei jedem Stand des Wasserspiegels (3) der gleiche, die Abflussmenge bestimmende, voreinstellbare, bei Erfordernis veränderbare Anteil der Querschnittsfläche der Ablauföffnung (2,2') in die Flüssigkeit eingetaucht ist (Eintauchtiefe h) und die gleiche voreinstellbare, bei Erfordernis verstellbare eingetauchte Querschnittsfläche vorliegt, und dass die Ablauföffnung so gross bemessen ist, dass bei jedem Stand des Wasserspiegels die pro Zeiteinheit abfliessende Wassermenge konstant ist.

2. Becken oder Bauwerk nach Anspruch 1, dadurch gekennzeichnet, dass ein drehbar an einer Seitenwand (18) befestigter Teller (9) vorgesehen ist, der im Abstand zur Drechachse die Ablauföffnung (2) und den Auftriebskörper (6) aufweist, und dass im Schwenkbereich der Ablauföffnung (2) in der Wand (18) eine Ausnehmung (14) vorgesehen ist, die unter dem Wasserspiegel durch den Teller (9) abgeschlossen ist.

3. Becken oder Bauwerk nach Anspruch 2, dadurch gekennzeichnet, dass der Schwenkbereich durch zwei in der Wand (18) befestigte Anschläge (11) und einen Nocken (12) am Teller (9) begrenzt ist, so dass der Totpunkt nicht überschritten wird.

4. Becken oder Bauwerk nach Anspruch 1, dadurch gekennzeichnet, dass an der Ablaufleitung (8) auf der ganzen Länge ein Auftriebskörper (40) angeordnet ist, dessen Auftrieb so gross ist, dass die Ablaufleitung (8) im Betriebszustand schwebt.

5. Becken oder Bauwerk nach einem der vorhergehenden Ansprüche, dadurch gekennzeichnet, dass im oder neben dem Ablaufrohr (8,22) in Bodennähe innerhalb der Höhe (h) eine Hilfsöffnung (70) vorgesehen ist, so dass bodennahes Wasser abfliessen kann.

6. Becken oder Bauwerk nach Anspruch 5, dadurch gekennzeichnet, dass die Hilfsöffnung (70) so dimensioniert ist, dass bei jedem Wasserstand der durchtretende Wasserfluss zusammen mit dem durch die Ablauföffnung (2,2') durchtretenden Fluss nicht grösser ist als der zulässige Fluss.

7. Becken oder Bauwerk (1) nach einem der Ansprüche 1,4,5 oder 6, dadurch gekennzeichnet, dass die Ablauföffnung (2,2') an einer ausserhalb einer Wand (18) des Beckens (1) angeordneten Ablaufleitung (8) vorgesehen ist, und dass im Inneren des Beckens (1) ein zur Ablaufleitung (8) etwa spiegelbildlich ausgebildetes Rohr (80) mit einem Auftriebskörper (50) vorgesehen ist, das über einen durch die Wand (18) führenden Rohrbereich (83) mit einer bodennahen Abflussöffnung (82) starr mit der Ablaufleitung (8) verbunden ist, wobei der Auftrieb des Rohres (80) so gross ist, dass bei jedem Wasserstand im Becken (1) die Ablauföffnung (2) in vorbestimmter Lage (Eintauchtiefe) zum Wasserspiegel liegt.

## Claims

1. Catchment or settling basin or control structure (1) with a variable fluid level with a discharge device with a substantially constant flow quantity per unit of time, and a discharge orifice (2, 2') arranged at the end of the pipe (8) which is adjustable in height substantially vertically to the level of the fluid (3) as well as a buoyancy element (4, 6) connecting with the pipe (8), through which the water in the basin (1) flows out through a lower lying outlet (7), characterized in that the discharge orifice (2.2') is circular in shape and the buoyancy element (4,4) is circular and arranged concentrically with the discharge orifice (2, 2') and that with every level of the water (3), the same proportion of the cross sectional area of the surface of the discharge orifice (2, 2') which determines the outflow quantity and can be altered if required, is immersed (immersion depth h) and the same selectably variable immersed cross sectional surface is provided and that the discharge orifice is dimensioned adequately so that it is sufficiently large to permit a constant flow of water per unit of time at every state of the water level.

2. Basin or structure according to Claim 1, characterized in that a rotary plate (9) is provided fastened on a side wall (18) which has a spacing to the axis of the discharge orifice (2) and the buoyancy element (6) and that a recess (14) is provided in the wall (18) in the field of traverse of the discharge orifice (2) which is closed under the water level by the plate (9).

3. Basin or structure according to Claim 2, characterized in that the field of traverse is limited by two stops (11) fastened in the wall (18) and a boss (12) on the plate (9) so that the dead centre is not exceeded.

4. Basin or structure according to Claim 1, characterized in that a buoyancy element (40) is arranged on the entire length of the discharge orifice (8), the buoyancy of which is sufficiently great to hold the discharge orifice (8) in suspension when in the operational state.

5. Basin or structure according to Claim 1, characterized in that an auxiliary orifice (70) is provided in or adjacent to the discharge pipe (8, 22) close to the bottom of the basin within the height (h) so that the water near to the bottom can flow out.

6. Basin or structure according to Claim 5, characterized in that the auxiliary orifice (70) is so dimensioned so that, at every level of the water, the water flow, including that passing through the discharge orifice (2), is not greater than the permitted value.

7. Basin or structure according to one of the Claims 1,4, 5 or 6, characterized in that the discharge orifice (2, 2') is arranged on a discharge pipe (8) on the outside wall (18) of the basin (1) and that, in the internal part of the basin (1), a pipe (80) approximately formed as a mirror image of the discharge pipe (8) is provided with a buoyancy element (50) which is connected with the discharge pipe leading through the wall (18) via a guiding pipe area (83) with a discharge orifice (29) close to the bottom rigidly connected with the discharge pipe (8) whereby the buoyancy of the pipe (80) is sufficiently great that, with every water level in the basin (1), the discharge orifice (2) lies in a predetermined position (immersion depth) to the water level.

## Revendications

1. Bassin de retenue ou de décantation, ou ouvrage de régulation (1), à niveau de liquide variable et débit de décharge sensiblement constant par unité de temps, comportant un orifice de décharge (2,2') de hauteur réglable, monté avec une orientation sensiblement perpendiculaire par rapport au plan du niveau de liquide (3) à l'extrémité d'un tube de décharge (8), ainsi qu'un flotteur (4,6) relié au tube (8), pour assurer l'écoulement de l'eau qui se trouve dans le bassin par un orifice de sortie (7) disposé plus bas, caractérisé en ce que l'orifice de décharge (2,2') présente une forme circulaire, le montage du flotteur (4,6) de forme circulaire étant concentrique à l'orifice de décharge (2,2'), en ce que pour toute hauteur du niveau de l'eau (3) l'orifice de décharge (2,2') présente une même fraction de sa section de passage immergée dans le liquide (profondeur d'immersion h), cette fraction qui détermine le débit de décharge étant réglable à l'avance et pouvant être modifiée en cas de besoin, et cette même fraction réglable de la section transversale immergée, réglable en cas de besoin, étant toujours présente, et en ce que les dimensions de l'orifice de décharge sont déterminées de manière à maintenir constante la quantité d'eau qui s'écoule par unité de temps, quelle que soit la hauteur du niveau de l'eau.

2. Bassin ou ouvrage selon la revendication 1, caractérisé en ce qu'un disque (9) fixé de manière pivotante à une paroi latérale (18) est prévu pour porter à une certaine distance de son axe de pivotement l'orifice de décharge (2) et le flotteur (6), et en ce qu'une échancrure (2) est prévue dans la paroi (18), dans la plage angulaire de débattement de l'orifice d'échappement (2), cette échancrure (2) étant obturée par le disque (9) en-dessous du niveau de l'eau.

3. Bassin ou ouvrage selon la revendication 2, caractérisé en ce que la plage angulaire de débattement est limitée par deux butées (11) fixées à la paroi (18) et par un bossage (12) de la plaque (9), de manière à éviter de dépasser le point mort.

4. Bassin ou ouvrage selon la revendication 1, caractérisé en ce qu'un flotteur (40) est disposé sur le tube de décharge (8) sur toute la longueur de celui-ci, la sustentation assurée par ce flotteur étant assez forte pour soutenir le tube de décharge (8) en position de service.

5. Bassin ou ouvrage selon l'une des revendications précédentes, caractérisé en ce qu'un orifice auxiliaire (70) est prévu dans le tube de décharge (8,22) ou à côté de celui-ci à proximité du fond et dans les limites de la hauteur (h), pour permettre l'évacuation de l'eau à proximité du fond.

6. Bassin ou ouvrage selon la revendication 5, caractérisé en ce que l'orifice auxiliaire (70) présente des dimensions telles que, pour toute valeur de la hauteur d'eau, le débit de l'eau dans cet orifice augmenté de débit de l'eau évacuée par l'orifice de décharge (2,2') n'excède pas la valeur du débit admissible.

7. Bassin ou ouvrage (1) selon l'une des revendications 1,4,5 ou 6, caractérisé en ce que l'orifice de décharge (2,2') est prévu sur une canalisation de décharge (8) disposée à l'extérieur d'une paroi (18) du bassin (1), et en ce qu'à l'intérieur du bassin (1) est disposé un tube (80) sensiblement symétrique à la canalisation de décharge (8) et pourvu d'un flotteur (50), ce tube étant rigidement relié à la canalisation de décharge (8) par un tronçon tubulaire (83) qui passe à travers la paroi (18) et qui est pourvu d'un orifice d'évacuation (82) proche du fond, la flottabilité du tube (80) étant assez forte pour maintenir l'orifice de décharge (2) dans une position prédéterminée par rapport au niveau de l'eau (profondeur d'immersion), quelle que soit la hauteur du niveau de l'eau dans le bassin (1).

## Fig. 1

## Fig. 2

Fig. 3

Fig. 4

Fig. 5

Fig. 6

Fig. 7

Fig. 8

FIG. 9